# FASCICULE DE BREVET EUROPEEN

(11) **EP 2 245 604 B1**
(45) Date de publication et mention de la délivrance du brevet: **29.05.2019**
(21) Numéro de dépôt: 09716754.8
(22) Date de dépôt: 28.01.2009
(51) Int. Cl.: G06Q 20/34, G06Q 20/40, G07F 7/10

(54) **PROCEDE DE VERIFICATION D'UN CODE**
VERFAHREN ZUR ÜBERPRÜFUNG EINES CODES
METHOD FOR VERIFYING A CODE

(30) Priorité: 30.01.2008 FR 0800491
(43) Date de publication de la demande: 03.11.2010
(73) Titulaire: Idemia Identity & Security France, 92400 Courbevoie (FR)
(72) Inventeur: ROUDIERE, Guillaume, F-92400 COURBEVOIE (FR); GONCALVES, Louis-Philippe, F-92400 COURBEVOIE (FR); DECROIX, David, F-92400 COURBEVOIE (FR)
(74) Mandataire: Lavialle, Bruno François Stéphane
(86) Numéro de dépôt international: PCT/FR2009/000094
(87) Numéro de publication internationale: WO 2009/109719

(56) Documents cités:
- EP-A- 0 252 849
- WO-A-00/11623
- DE-A1- 10 247 794
- FR-A- 2 810 481
- US-A1- 2005 166 061

## Description

La présente invention concerne un procédé de vérification d'un code personnel utilisable notamment pour autoriser des transactions initiées entre une carte à circuit intégré et un terminal tel qu'un terminal de paiement ou un distributeur automatique de billets.

### ARRIERE PLAN DE L'INVENTION

Une carte à circuit intégré, comme une carte bancaire, permet la mémorisation de données relatives à son propriétaire, telles que des données d'identification et des coordonnées bancaires. Lorsqu'une transaction est initiée avec un terminal, ces données sont communiquées par la carte au terminal afin que celui-ci puisse demander l'exécution d'opérations sur le compte bancaire du propriétaire de la carte. Toutefois, il est nécessaire au préalable de vérifier que le détenteur de la carte est bien la personne à qui la carte a été délivrée ou a bien été autorisée à utiliser la carte par cette personne. Pour ce faire, un code secret est mémorisé sous forme chiffrée dans une mémoire non volatile de la carte à circuit intégré et ce code est demandé par le terminal au détenteur de la carte qui désire initier une transaction.

Afin de faciliter sa mémorisation par les propriétaires de cartes, le code secret comporte généralement quatre chiffres autorisant dix mille combinaisons. On comprend qu'un fraudeur pourrait être tenté d'essayer toutes les combinaisons possibles jusqu'à trouver le code secret de manière à pouvoir effectuer des transactions au moyen de la carte. Pour empêcher cela, il est connu de recourir à un compteur de ratification qui limite le nombre de tentatives de vérification à un nombre prédéterminé, généralement trois. Si au bout de trois tentatives, le détenteur de la carte n'est pas parvenu à fournir le code correct, la carte se bloque et devient inutilisable jusqu'à ce que le détenteur de la carte se soit identifié auprès de l'organisme émetteur de la carte et ait démontré à celui-ci qu'il est autorisé à utiliser ladite carte. Le nombre maximal possible de tentatives et le nombre restant de tentatives sont enregistrés dans une mémoire non volatile de la carte.

Un procédé basique de vérification du code secret pourrait prévoir de décrémenter le nombre restant de tentatives après chaque échec de la vérification. Or, cette opération, comme toute opération d'écriture d'une donnée dans une mémoire non volatile, nécessite un apport d'énergie fournie au circuit intégré par le lecteur. On s'exposerait alors au risque qu'un fraudeur coupe l'alimentation du circuit intégré de la carte après chaque tentative infructueuse pour empêcher la décrémentation du nombre restant de tentatives.

Pour obvier à cet inconvénient, il existe un procédé de vérification plus élaboré dans lequel on commence par décrémenter le nombre restant de tentatives préalablement à chaque vérification. Après chaque vérification réussie, le nombre maximal possible de tentatives est enregistré en mémoire comme nombre restant de tentatives alors qu'après chaque échec, le nombre restant de tentatives est laissé inchangé en mémoire. Un inconvénient de cette solution est qu'elle nécessite deux opérations d'écritures en mémoire non volatile, ce qui accroît la consommation énergétique de la carte. En outre, en cas de rupture accidentelle de l'alimentation du circuit intégré après une vérification correcte du code, il existe un risque que l'enregistrement du nombre maximal possible de tentatives comme nombre restant de tentatives ne puisse être réalisé. Cet inconvénient est particulièrement préjudiciable, mais pas uniquement, dans le cas des cartes sans contact dans lesquelles l'alimentation en énergie de la carte est assurée par un champ électromagnétique dans lequel se trouve la carte. Un déplacement de la carte ou d'un objet voisin venant masquer l'émetteur du champ électromagnétique peut entraîner une interruption de l'alimentation en énergie du circuit intégré.

Le document FR-A-2 810 481 divulgue un procédé de vérification d'un code personnel au moyen d'une carte à puce comprenant un processeur, une fonction de transformation et une mémoire contenant un code secret transformé à partir d'un code confidentiel.

### OBJET DE L'INVENTION

Par l'invention, on propose un procédé de vérification qui soit fiable et économe en énergie.

### RESUME DE L'INVENTION

A cet effet, l'invention concerne un procédé de vérification d'un code personnel au moyen d'une mémoire contenant des nombres aléatoires associés chacun à un numéro d'ordre, des résultats d'un calcul effectué sur chaque nombre aléatoire en utilisant une fonction bijective et le code personnel comme paramètre de spécification de la fonction bijective, un nombre maximal possible de tentatives de vérification, un nombre théorique restant de tentatives de vérification et une valeur de contrôle qui est associée à un numéro d'ordre, le procédé comprenant les étapes de :
- comparer la valeur de contrôle et le nombre aléatoire correspondant au numéro d'ordre associé à la valeur de contrôle ; si la valeur de contrôle et ledit nombre aléatoire sont identiques, prendre comme nombre réel restant de tentatives de vérification le nombre maximal possible ; si la valeur de contrôle est différente dudit nombre aléatoire, prendre comme nombre réel restant le nombre théorique restant,
- récupérer un code soumis par un utilisateur lorsque le nombre réel restant est différent de zéro et calculer une valeur de contrôle sur le résultat correspondant à un numéro d'ordre sélectionné, avec une fonction inverse de la fonction bijective en utilisant le code soumis comme paramètre de spécification de la fonction inverse,
- mémoriser la valeur de contrôle dernièrement calculée associée au numéro d'ordre dernièrement sélectionné, décrémenter le nombre réel restant et mémoriser comme nombre théorique restant le nombre réel restant décrémenté,
- vérifier que la valeur de contrôle est identique au nombre aléatoire correspondant au numéro d'ordre sélectionné.

Ainsi, la valeur de contrôle et le numéro d'ordre qui lui est associé permettent :
- d'une part, de vérifier par comparaison avec le nombre aléatoire correspondant à ce numéro d'ordre si le code soumis est identique au code mémorisé, et
- d'autre part, de déterminer pour la vérification suivante le nombre restant de tentatives de vérification.

En effet, a titre d'exemple la fonction bijective peut être une fonction de chiffrement de type DES ou autre dont le paramètre de spécification constitue la clé de chiffrement. L'identité de la valeur de contrôle et du nombre aléatoire correspondant signifie que la vérification précédente était réussie. Le nombre restant de tentatives est alors égal au nombre maximal possible de tentatives. Une différence entre la valeur de contrôle et le nombre aléatoire révèle que la vérification précédente était un échec. Le nombre restant de tentatives est alors égal au nombre théorique restant de tentatives. Par paramètre de spécification, on entend un paramètre tel que pour une première valeur du paramètre la fonction donne un premier résultat et, pour une deuxième valeur du paramètre différente de la première valeur du paramètre, la fonction donne un deuxième résultat différent du premier, tous termes égaux par ailleurs.

La mise en oeuvre du procédé conforme à l'invention ne nécessite donc qu'une seule opération d'écriture qui précède la vérification.

D'autres caractéristiques et avantages de l'invention ressortiront à la lecture de la description qui suit d'un mode de mise en oeuvre particulier non limitatifs de l'invention.

### BREVE DESCRIPTION DES DESSINS

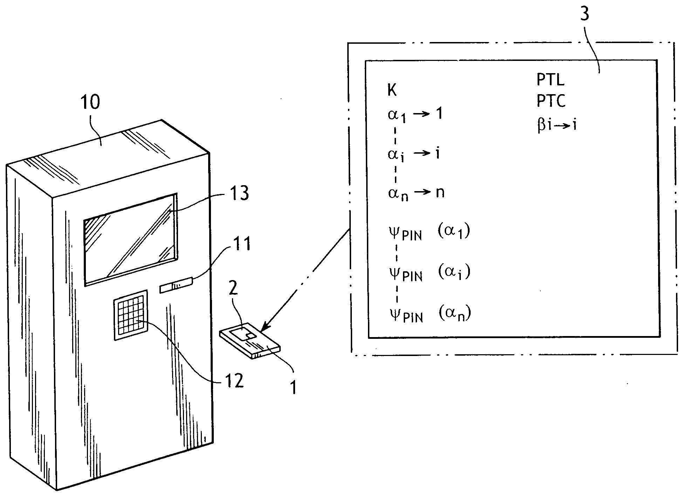

Il sera fait référence à la figure unique annexée représentant schématiquement une carte à circuit intégré adaptée pour la mise en oeuvre du procédé conforme à l'invention.

### DESCRIPTION DETAILLEE DE L'INVENTION

L'invention est ici décrite en application à une carte de données comportant un corps de carte 1 dans lequel est enchâssé un circuit intégré 2 définissant de façon connue en soi un microprocesseur relié à une mémoire volatile et à une mémoire non volatile symbolisée en 3. La structure du circuit intégré et son mode de fonctionnement sont classiques et sans rapport direct avec l'invention, de sorte qu'ils ne seront pas décrits plus en détail ici. Le circuit intégré 2 est relié à des moyens de communication avec l'extérieur. Ces moyens, qui ne sont pas représentés sur la figure, sont par exemple des plages de contact permettant, par contact avec des conducteurs d'un lecteur de carte, d'échanger des informations avec un terminal, tel qu'un terminal de paiement relié au lecteur de carte. En variante, les moyens de communication comprennent une antenne noyée dans le corps de carte pour alimenter le processeur et échanger des informations avec un terminal lorsque la carte se trouve dans un champ électromagnétique produit par un émetteur récepteur relié audit terminal.

La mémoire non volatile 3 contient un programme assurant le fonctionnement de la carte et des données utilisées par le programme pour assurer le fonctionnement de la carte.

Le fonctionnement de la carte nécessite la mise en oeuvre d'un code personnel PIN.

Parmi les données mémorisées dans la mémoire non volatile 3 se trouvent :
- des nombres aléatoires αᵢ associés chacun à un numéro d'ordre i, les nombres aléatoires αᵢ sont au nombre de n, i variant de 1 à n,
- des résultats ψ_{PIN} (αᵢ) d'un calcul effectué sur chaque nombre aléatoire en utilisant une fonction bijective ψ avec le code PIN comme paramètre de spécification,
- un nombre maximal possible de tentatives de vérification, noté PTL,
- un nombre théorique restant de tentatives de vérification, noté PTC,
- une valeur de contrôle βᵢ qui est associée à un numéro d'ordre i et qui correspond à un calcul effectué sur le résultat ψ_{PIN} (αᵢ) correspondant au numéro d'ordre i en utilisant la fonction inverse ψ_{M}⁻¹ de la fonction bijective ψ_{M} où M est un code préalablement soumis ainsi que cela sera explicité dans la suite de la description. Lors du premier enregistrement des valeurs βᵢ dans la mémoire (initialisation de la carte), on prend M = PIN.

La fonction bijective ψ ici choisie est une fonction facilement inversible de chiffrement utilisant un algorithme DES ("Data Encryption Standard" ou standard de chiffrement de données) dans lequel le code mémorisé PIN chiffré sert de clé de chiffrement. Pour servir de paramètre de spécification, le code PIN a été préalablement chiffré par un algorithme DES utilisant une clé K comme clé de chiffrement. La clé est définie dans la mémoire non volatile de la carte et sa valeur est propre à chaque carte.

Une opération de vérification d'un code soumis va maintenant être décrite.

Pour qu'une telle vérification ait lieu, il est nécessaire dans le présent mode de réalisation, que le circuit intégré 2 de la carte soit en liaison avec un terminal 10 équipé d'un lecteur de carte 11, d'un clavier 12 sur lequel le détenteur de la carte peut taper son code et d'un écran 13 sur lequel sont affichés des messages à destination du détenteur de la carte. Le nombre maximal possible de tentatives est dans cet exemple égal à trois, de sorte que la valeur PTL vaut trois et que la carte est bloquée lorsque la valeur PTC vaut zéro. Le nombre n de nombres aléatoires αᵢ est au moins égal à PTL (ici n vaut 3).

Lorsque le microprocesseur 2 est en liaison avec le terminal et que le détenteur de la carte souhaite initier une transaction nécessitant qu'il s'identifie en donnant son code personnel, le terminal commence par interroger le microprocesseur 2 pour obtenir le nombre restant actualisé de tentatives de vérification, noté PTC', qui va être affiché sur l'écran 13 à destination du détenteur de la carte pour que ce dernier sache combien de tentatives il lui reste pour faire vérifier son code.

Le programme exécuté par le microprocesseur compare alors la valeur de contrôle βᵢ et le nombre aléatoire αᵢ correspondant au numéro d'ordre i associé à la valeur de contrôle βᵢ.

Si la valeur de contrôle βᵢ et ce nombre aléatoire αᵢ sont identiques, le microprocesseur affecte au nombre restant actualisé PTC' le nombre maximal possible, à savoir la valeur PTL. En revanche, si la valeur de contrôle βᵢ est différente du nombre aléatoire αᵢ, le programme affecte la valeur PTC au nombre restant actualisé PTC'.

Lorsque la valeur PTC est égale à zéro, une transaction ne peut être initiée et la carte se bloque. Il peut alors être également prévu dans ce cas que le lecteur ne restitue pas la carte.

Lorsque la valeur PTC est différente de zéro, le terminal 10 affiche un message demandant au détenteur de la carte de soumettre un code au moyen du clavier 12 et transmet le code soumis M au programme exécuté par le microprocesseur.

Une fois le code soumis M récupéré par le programme, le programme chiffre le code soumis M en utilisant l'algorithme de chiffrement DES et la clé K mémorisée dans la carte.

Un numéro d'ordre i est ensuite sélectionné, ici par tirage au sort. Une valeur de contrôle βᵢ correspondant à ce numéro d'ordre est ensuite calculée en utilisant la fonction ψ⁻¹ inverse de la fonction bijective inversible ψ avec comme paramètre de spécification le code soumis M chiffré, soit βᵢ = ψ_{M}⁻¹(ψ_{PIN}(αᵢ)). La fonction ψ⁻¹ inverse de la fonction bijective inversible ψ est une fonction de déchiffrement basée sur l'algorithme DES dans lequel le code soumis M chiffré sert de clé de déchiffrement.

Le programme inscrit alors en mémoire non volatile 3 le numéro d'ordre i dernièrement sélectionné, la valeur de contrôle βᵢ dernièrement calculée et une nouvelle valeur PTC du nombre théorique restant correspondant à la valeur du nombre réel restant décrémentée de un.

La vérification du code soumis M est ensuite réalisée, à savoir que le programme compare la valeur βᵢ dernièrement enregistrée en mémoire non volatile 3 au nombre aléatoire αᵢ correspondant au numéro d'ordre i dernièrement enregistré dans la mémoire non volatile 3.

Si la valeur de contrôle βᵢ est identique au nombre aléatoire αᵢ, alors le code soumis M est identique au code PIN et la transaction est autorisée.

A l'inverse, si le code soumis M est différent du code PIN, le programme informe le terminal 10 que la transaction est refusée. Le terminal demande alors au programme le nombre restant actualisé PTC' de tentatives.

La suite de la nouvelle opération de vérification se déroule comme décrit précédemment.

Dans un mode de réalisation préféré, la carte subit une phase d'initialisation avant sa première utilisation. Cette phase d'initialisation consiste à enregistrer dans la mémoire non volatile 3 de la carte un numéro d'ordre i sélectionné et comme valeur de contrôle βᵢ le nombre aléatoire αᵢ correspondant.

Ainsi, lors de la première interrogation de la carte pour connaître le nombre restant actualisé de tentatives PTC', la valeur de contrôle βᵢ est forcément égale au nombre aléatoire αᵢ correspondant au numéro d'ordre i associé à la valeur de contrôle βᵢ de sorte que la carte renvoie automatiquement la valeur PTL comme nombre restant actualisé.

Bien entendu, l'invention n'est pas limitée au mode de réalisation décrit et on peut y apporter des variantes de réalisation sans sortir du cadre de l'invention telle que définie par les revendications.

En particulier, le chiffrement du code secret et du code soumis n'est pas indispensable à la mise en oeuvre du procédé conforme à l'invention.

Il est possible d'utiliser toute fonction bijective et pas seulement une fonction de chiffrement utilisant un algorithme de type DES.

Le numéro d'ordre i peut être sélectionné par un autre moyen comme un calcul et notamment une incrémentation ou une décrémentation du numéro d'ordre précédemment sélectionné.

## Revendications

1. Procédé de vérification d'un code personnel au moyen d'une mémoire contenant des nombres aléatoires associés chacun à un numéro d'ordre, des résultats d'un calcul effectué sur chaque nombre aléatoire en utilisant une fonction bijective et le code personnel comme paramètre de spécification de la fonction bijective, un nombre maximal possible de tentatives de vérification, un nombre théorique restant de tentatives de vérification et une valeur de contrôle qui est associée à un numéro d'ordre, le procédé comprenant les étapes de :
- comparer la valeur de contrôle et le nombre aléatoire correspondant au numéro d'ordre associé à la valeur de contrôle ; si la valeur de contrôle et ledit nombre aléatoire sont identiques, prendre comme nombre réel restant de tentatives de vérification le nombre maximal possible ; si la valeur de contrôle est différente dudit nombre aléatoire, prendre comme nombre réel restant le nombre théorique restant,
- récupérer un code soumis par un utilisateur lorsque le nombre réel restant est différent de zéro et calculer une valeur de contrôle sur le résultat correspondant à un numéro d'ordre sélectionné, avec une fonction inverse de la fonction bijective en utilisant le code soumis comme paramètre de spécification de la fonction inverse,
- mémoriser la valeur de contrôle dernièrement calculée associée au numéro d'ordre dernièrement sélectionné, décrémenter le nombre réel restant et mémoriser comme nombre théorique restant le nombre réel restant décrémenté,
- vérifier que la valeur de contrôle est identique au nombre aléatoire correspondant au numéro d'ordre sélectionné.

2. Procédé de vérification selon la revendication 1, dans lequel le code personnel est chiffré avant d'être utilisé comme paramètre de spécification dans la fonction bijective et le code soumis est chiffré de la même manière avant d'être utilisé comme paramètre de spécification dans la fonction inverse de la fonction bijective.

3. Procédé de vérification selon la revendication 2, dans lequel la fonction bijective est une fonction de chiffrement dans laquelle le code est utilisé comme clé de chiffrement.

4. Procédé selon la revendication 3, dans lequel la fonction de chiffrement est un algorithme de type DES.

5. Procédé selon la revendication 1, comprenant une phase d'initialisation comprenant les étapes de sélectionner un numéro d'ordre et d'enregistrer comme valeur de contrôle le nombre aléatoire correspondant à ce numéro d'ordre.

6. Procédé selon la revendication 1, dans lequel le nombre de nombres aléatoires est au moins égal au nombre maximal possible de tentatives.

7. Procédé selon la revendication 1, dans lequel le numéro d'ordre est déterminé à chaque vérification par tirage au sort ou par un calcul tel qu'une incrémentation.

## Patentansprüche

1. Verfahren zum Überprüfen eines persönlichen Codes mittels eines Speichers, enthaltend Zufallszahlen, die jeweils einer laufenden Nummer zugeordnet sind, Ergebnisse einer Berechnung, die für jede Zufallszahl durchgeführt wird, indem eine bijektive Funktion und der persönliche Code als Spezifikationsparameter der bijektiven Funktion verwendet werden, eine maximal mögliche Anzahl von Überprüfungsversuchen, eine verbleibende theoretische Anzahl von Überprüfungsversuchen sowie einen Kontrollwert, der einer laufenden Nummer zugeordnet ist, wobei das Verfahren die Schritte umfasst:
- Vergleichen des Kontrollwertes und der Zufallszahl, die der laufenden Nummer entspricht, die dem Kontrollwert zugeordnet ist; wenn der Kontrollwert und die genannte Zufallszahl identisch sind, Verwenden der maximal möglichen Anzahl als verbleibende tatsächliche Anzahl von Überprüfungsversuchen; wenn sich der Kontrollwert von der genannten Zufallszahl unterscheidet, Verwenden der verbleibenden theoretischen Anzahl als verbleibende tatsächliche Anzahl,
- Wiederverwenden eines von einem Nutzer eingegebenen Codes, wenn die verbleibende tatsächliche Anzahl ungleich Null ist, und Berechnen eines Kontrollwertes für das Ergebnis, der einer ausgewählten laufenden Nummer entspricht, mit einer Umkehrfunktion der bijektiven Funktion, indem der eingegebene Code als Spezifikationsparameter der Umkehrfunktion verwendet wird,
- Speichern des zuletzt berechneten Kontrollwertes, der der zuletzt ausgewählten laufenden Nummer zugeordnet ist, Dekrementieren der verbleibenden tatsächlichen Anzahl und Speichern der dekrementierten verbleibenden tatsächlichen Anzahl als verbleibende theoretische Anzahl,
- Überprüfen, ob der Kontrollwert identisch zur Zufallszahl ist, die der ausgewählten laufenden Nummer entspricht.

2. Verfahren zum Überprüfen nach Anspruch 1, bei dem der persönliche Code verschlüsselt wird, ehe er als Spezifikationsparameter in der bijektiven Funktion verwendet wird, und der eingegebene Code auf dieselbe Weise verschlüsselt wird, ehe er als Spezifikationsparameter in der Umkehrfunktion der bijektiven Funktion verwendet wird.

3. Verfahren zum Überprüfen nach Anspruch 2, bei dem die bijektive Funktion eine Verschlüsselungsfunktion ist, in der der Code als Verschlüsselungsschlüssel verwendet wird.

4. Verfahren nach Anspruch 3, bei dem die Verschlüsselungsfunktion ein Algorithmus vom Typ DES ist.

5. Verfahren nach Anspruch 1, umfassend eine Initialisierungsphase, umfassend die Schritte des Auswählens einer laufenden Nummer und des Abspeicherns der Zufallszahl, die dieser laufenden Nummer entspricht, als Kontrollwert.

6. Verfahren nach Anspruch 1, bei dem die Anzahl von Zufallszahlen mindestens gleich der maximal möglichen Anzahl von Versuchen ist.

7. Verfahren nach Anspruch 1, bei dem die laufende Nummer bei jeder Überprüfung durch Auslosung oder durch eine Berechnung, wie z. B. eine Inkrementierung, bestimmt wird.

## Claims

1. Method of verifying a personal code by means of a memory containing random numbers each associated with a sequence number, the results of a calculation performed on each random number using a bijective function and the personal code as a specification parameter of the bijective function, a maximum possible number of verification attempts, a theoretical remaining number of verification attempts and a control value that is associated with a sequence number, the method comprising the steps of:
- comparing the control value and the random number corresponding to the sequence number associated with the control value; if the control value and said random number are identical, take as the real remaining number of verification attempts the maximum possible number; if the control value is different from said random number, take as the real remaining number the theoretical remaining number,
- recover a code submitted by a user when the real remaining number is different from zero and calculate a control value on the result corresponding to a selected sequence number, using an inverse function of the bijective function using the code submitted as a specification parameter of the inverse function,
- store the last calculated control value associated with the last selected sequence number, decrement the real remaining number and store as the theoretical remaining number the decremented real remaining number,
- verify that the control value is identical to the random number corresponding to the selected sequence number.

2. Verification method according to claim 1, in which the personal code is encrypted before being used as a specification parameter in the bijective function and the submitted code is encrypted in the same way before being used as a specification parameter in the inverse function of the bijective function.

3. Verification method according to claim 2, in which the bijective function is an encryption function in which the code is used as an encryption key.

4. Method according to claim 3, in which the encryption function is a DES type algorithm.

5. Method according to claim 1, comprising an initialization phase comprising the steps of selecting a sequence number and storing as the control value the random number corresponding to that sequence number.

6. Method according to claim 1, in which the number of random numbers is at least equal to the maximum possible number of attempts.

7. Method according to claim 1, in which the sequence number is determined at each verification at random or by a calculation such as an incrementation.
